# NEUE EUROPÄISCHE PATENTSCHRIFT

(11) **EP 1 984 428 B2**
(45) Veröffentlichungstag und Bekanntmachung des Hinweises auf die Entscheidung über den Einspruch: **02.04.2014**
(45) Hinweis auf die Patenterteilung: 01.07.2009
(21) Anmeldenummer: 07726329.1
(22) Anmeldetag: 08.02.2007
(51) Int. Cl.: C08J 3/12, C08F 2/20, C08F 2/28, C08F 220/34, C08F 220/60, C08F 226/04

(54) **VERFAHREN ZUR HERSTELLUNG VON KATIONISCH STABILISIERTEN UND IN WASSER REDISPERGIERBAREN POLYMERPULVERZUSAMMENSETZUNGEN**
PROCESS FOR PRODUCING CATIONICALLY STABILIZED AND WATER-REDISPERSIBLE POLYMER POWDER COMPOSITIONS
PROCÉDÉ DE PRÉPARATION DE COMPOSITIONS DE POUDRES POLYMÈRES À STABILISATION CATIONIQUE REDISPERSIBLES DANS L'EAU

(30) Priorität: 16.02.2006 DE 102006007282
(43) Veröffentlichungstag der Anmeldung: 29.10.2008
(73) Patentinhaber: Wacker Chemie AG, 81737 München (DE)
(72) Erfinder: SCHORM, Andrea, 81667 München (DE); WEITZEL, Hans-Peter, 84571 Reischach (DE); KILLAT, Stefan, 84489 Burghausen (DE); LUTZ, Hermann, 84547 Emmerting (DE)
(74) Vertreter: Schuderer, Michael
(86) Internationale Anmeldenummer: PCT/EP2007/051209
(87) Internationale Veröffentlichungsnummer: WO 2007/093551

(56) Entgegenhaltungen:
- EP-A1- 0 632 096
- EP-A1- 1 188 377
- EP-A2- 0 770 640
- WO-A1-00//05275
- WO-A1-00//05283
- DE-A1- 19 711 741
- DE-A1- 19 833 062
- JP-A- S5 930 827
- JP-A- S57 121 671
- JP-A- S58 185 640
- US-A1- 2007 112 117
- US-B1- 6 605 663
- US-B1- 6 765 072
- LOVELL ET AL.: 'Emulsion Polymerization and Emulsion Polymers', 1997, JOHN WILLEY & SONS, NEW YORK Seiten 100 - 113
- E. BARTHOLOMÉ ET AL.: 'Ullmanns Encyklopädie der technischen Chemie', Bd. 4, 1980, VERLAG CHEMIE, WEINHEIM Seiten 107 - 165

## Beschreibung

Die Erfindung betrifft ein Verfahren zur Herstellung von kationisch stabilisierten und in Wasser redispergierbaren Polymerpulverzusammensetzungen, wobei ein oder mehrere ethylenisch ungesättigte Monomere in Gegenwart eines nichtionischen Schutzkolloids und/oder eines nichtionischen Emulgators in wässrigem Medium radikalisch polymerisiert werden und anschließend getrocknet werden.

Die Stabilisierung wässriger Polymerdispersionen ist durch Dispergiermittel, die grenzflächenaktive Eigenschaften besitzen, erreichbar. Diese Funktion erfüllen wasserlösliche Verbindungen in Form von Schutzkolloiden oder Emulgatoren. Die Stabilisierung kann hierbei durch sterische Wechselwirkungen, beispielsweise durch nichtionische Polymere und Emulgatoren, oder durch elektrostatische Wechselwirkungen, letztere durch anionische oder kationische funktionelle Gruppen in Polymeren oder Emulgatoren, oder durch eine entsprechende Kombination daraus, erreicht werden.

Bei der Herstellung von redispergierbaren Dispersionspulvern auf der Monomerbasis von Vinylestern, Vinylchlorid,(Meth)acrylatmonomeren, Styrol, Butadien und/oder Ethylen, die in vielerlei Anwendungen, beispielsweise als Beschichtungsmittel oder Klebemittel für die unterschiedlichsten Substrate eingesetzt werden, ist Polyvinylalkohol als Schutzkolloid bei der Polymerisation und Trocknung bevorzugt, da Polyvinylalkohol dem Pulver eine effektive Stabilität gegenüber einer vorzeitigen Koaleszenz der Partikel verleiht. Wenn jedoch höhere Mengen an Dispersionspulver in der Endanwendung eingesetzt werden, kann sich der Polyvinylalkohol-Anteil nachteilig auswirken. Negativ beeinflusst wird beispielsweise die Verarbeitbarkeit von polymervergüteten hydraulisch abbindenden Mörtelmassen auf Basis von Zementen oder Gips, aufgrund hoher Kellenklebrigkeit und hoher Viskosität. Weiter bewirkt ein hoher Polyvinylalkohol-Anteil eine geringe Flexibilität der mit der Mörtelmasse hergestellten Klebeverbindungen.

Als mögliche Alternativen zu Polyvinylalkohol als Trocknungshilfsmittel werden Formaldehydkondensate der Melaminsulfonsäure (DE-A 2049114), der Naphtalinsulfonsäure (DE-A 2445813), der Phenolsulfonsäure (EP-A 407889) beschrieben, oder aliphatische Aldehydkondensationsprodukte der Dihydroxydiphenylsulfonsäure (WO-A 2005080478) eingesetzt. Des weiteren werden Ligninsulfonate (EP-A 149098) oder mit anionischen Gruppen funktionalisierte Polyelektrolyte (EP-A 073807, EP-A 982351) verwendet. Nachteilig bei diesen Alternativen ist die hohe Einsatzmenge an Trocknungshilfsmittel, die benötigt wird, um ein blockstabiles und schnell redispergierbares Pulver zu erhalten. Des weiteren ist die mit Sulfonsäureformaldehydkondensaten oder Ligninsulfonat auftretende Braunfärbung der Mörtelmasse in bestimmten Anwendungen störend.

Kationisch stabilisierte Dispersionspulver sind bereits im Stand der Technik beschrieben: Aus der WO-A 00/05275 ist ein Verfahren bekannt, bei dem kationische Monomere in wässrigem. Medium polymerisiert werden und in Gegenwart des dabei in-situ gebildeten Polymerisats weitere Monomere polymerisiert werden. Die damit erhaltene Polymerdispersion wird dann in Gegenwart von Polyvinylalkohol sprühgetrocknet. Ein dazu analoges Verfahren wird in der WO-A 00/05283 beschrieben, wobei hier das Verfahren so gesteuert wird, dass Copolymerisatteilchen mit heterogener Morphologie gebildet werden. Nachteilig an dem Verfahren ist jedoch, dass zur Herstellung des Dispersionspulvers mittels Sprühtrocknung der zunächst erhaltenen Polymerdispersion hohe Mengen an Polyvinylalkohol als Sprühtrocknungsschutzkolloid notwendig sind, und deshalb die bereits genannten Defizite bei hohen Einsatzmengen an Pulver auftreten.

In der EP-A 0770640 wird ein Verfahren zur Herstellung von redispergierbaren Polymerpulvern beschrieben, bei dem eine wässrige Polymerdispersion getrocknet wird, deren dispergierte Polymerteilchen eine negative oder positive elektrische Oberflächenladung aufweisen, wobei als Trocknungsmittel ein Polyion ausgewählt wird, dessen Oberflächenladung der der dispergierten Polymerteilchen entgegengesetzt ist. Nachteilig bei diesem Verfahren ist, dass es zur partiellen Koagulation der Polymerteilchen beim Vermischen von Dispersion und Schutzkolloid vor dem Sprühtrocknungsprozess kommen kann und somit das erhaltene Pulver eine schlechtere Redispergierfähigkeit aufweisen kann.

In der WO-A 98/13411 wird die Herstellung von redispergierbaren Dispersionspulvern beschrieben, die durch Sprühtrocknung eines Emulsionspolymerisats, welches anionische Gruppen, bevorzugt COOH-Gruppen, enthält, mit amphoteren Polymeren, bevorzugt Casein oder Natriumcaseinat, erhalten werden. Die Einsatzmenge des Schutzkolloids bei der Sprühtrocknung wird mit 2 bis 10 Gew.-% angegeben, jedoch werden erst mit 10 Gew.-% völlig klebfreie, rieselfähige Pulver erhalten. Nachteilig am Schutzkolloid Casein ist der native Ursprung und die damit einhergehende schwankende Produktqualität, die sich negativ auf die Konstanz der Pulverqualität auswirkt. Darüber hinaus spaltet Casein wie alle Proteine im Alkalischen Ammoniak ab, was zu einer VOC-Belastung (VOC = volatile organic compounds) führt.

Vor diesem Hintergrund bestand die Aufgabe, ein Dispersionspulver zu entwickeln, in dem die Vorteile des Polyvinylalkohols, der selbst als Bindemittel wirkt, genutzt werden, jedoch bei höheren Einsatzmengen an Dispersionspulver Verarbeitungsnachteile verringert und eine verbesserte Flexibilität in hydraulisch abbindenden Massen erzeugt werden.

Gegenstand der Erfindung ist ein Verfahren zur Herstellung von kationisch stabilisierten und in Wasser redispergierbaren Polymerpulverzusammensetzungen, wobei ein oder mehrere ethylenisch ungesättigte Monomere in Gegenwart eines nichtionischen Schutzkolloids und/oder eines nichtionischen Emulgators, in wässrigem Medium radikalisch polymerisiert werden und anschließend getrocknet werden, dadurch gekennzeichnet, dass die dabei erhaltenen wässrigen Polymerdispersionen nach Zusatz von 0,1 bis 20 Gew.-%, bezogen auf die polymeren Bestandteile der wässrigen Polymerdispersion eines kationischen Schutzkolloids aus der Gruppe bestehend aus Homo- oder Mischpolymerisate von einem oder mehreren kationischen Monomeren aus der Gruppe bestehend aus Diallyldimethylammoniumchlorid (DADMAC), Diallyldiethylammoniumchlorid (DADEAC), (3-Methacryloxy)propyltrimethylammoniumchlorid (MPTAC),(3-Methacryloxy)-ethyltrimethylammoniumchlorid,(METAC), (3-Methacrylamido)propyltrimethyl-ammoniumchlorid (MAPTAC), 2-Dimethylaminoethylmethacrylat oder 3-Dimethylaminopropylmethacrylamid (DMAEMA oder DMAPMA bei pH ≤ 5 protonierte Spezies) als Trocknungshilfsmittel getrocknet werden.

Geeignete kationische Schutzkolloide sind.

Die kationischen Schutzkolloide können mittels dem Fachmann bekannter Polymerisationsverfahren hergestellt werden, beispielsweise durch freie radikalische Polymerisation in wässriger Lösung, in Lösungsmittelgemischen oder in Gegenwart von Salzen, beispielsweise auch in Fällungspolymerisation, beispielsweise durch polymeranaloge Reaktion in Lösung oder Lösungsmittelgemischen, beispielsweise in Suspension oder beispielsweise durch inverse Emulsionspolymerisation hergestellt werden. Die Initiatoren können hierbei wasserlöslich oder öllöslich sein und aus der Gruppe der Persulfate, Peroxide, AzoVerbindungen sowie der Oxidations/Reduktionsinitiatorpaare stammen. Vor allem mit zuletzt genannter Methode der inversen Emulsionspolymerisation bzw. Wasser-in-Öl-Polymerisation werden extrem hochmolekulare kationische Polymere mit Molekulargewichten von > 5.000.000 g/mol erreicht.

Am meisten bevorzugt wird die Herstellung durch Lösungspolymerisation in Wasser mit geringen Festgehalten (vorzugsweise < 40 Gew.-%) in Gegenwart von wasserlöslichen Initiatoren wie Azoinitiatoren oder Redoxinitiatoren, gegebenenfalls in Gegenwart von Molekulargewichtsreglern wie Mercaptopropionsäure oder 2-Mercaptoethanol.

Bevorzugt werden kationische Schutzkolloide mit einem K-Wert (Bestimmung in Anlehnung an DIN 53726, 1 Gew.-% in Wasser, 25°C, Ubbelohde-Viskosimeter) von 10 bis 250, besonders bevorzugt 25 bis 130. Die Änderung zur DIN 53726, der Norm für die Bestimmung der Viskosität von PVC im Ubbelohde Viskosimeter, besteht darin, dass als Lösungsmittel anstatt Cyclohexanon Wasser eingesetzt wird. Die Höppler-Viskosität der kationischen Schutzkolloide beträgt 1 bis 50 mPas, vorzugsweise 1 bis 25 mPas, am meisten bevorzugt 1 bis 15 mPas (jeweils Bestimmung mit der Methode nach Höppler bei 20°C gemäß DIN 53015).

Für die Herstellung der wässrigen Polymerdispersion des filmbildenden Basispolymers geeignete Monomere sind Vinylester von unverzweigten oder verzweigten Alkylcarbonsäuren mit 1 bis 15 C-Atomen, Methacrylsäureester und Acrylsäureester von Alkoholen mit 1 bis 15 C-Atomen, Vinylaromaten, Olefine, Diene oder Vinylhalogenide.

Bevorzugte Vinylester sind Vinylacetat, Vinylpropionat, Vinylbutyrat, Vinyl-2-ethylhexanoat, Vinyllaurat, 1-Methylvinylacetat, Vinylpivalat und Vinylester von alpha-verzweigten Monocarbonsäuren mit 9 bis 13 C-Atomen, beispielsweise VeoVa9® oder VeoValO® (Handelsnamen der Firma Resolution). Besonders bevorzugt ist Vinylacetat. Bevorzugte Methacrylsäureester oder Acrylsäureester sind Methylacrylat, Methylmethacrylat, Ethylacrylat, Ethylmethacrylat, Propylacrylat, Propylmethacrylat, n-Butylacrylat, n-Butylmethacrylat, 2-Ethylhexylacrylat, Norbornylacrylat. Besonders bevorzugt sind Methylacrylat, Methylmethacrylat, n-Butylacrylat und 2-Ethylhexylacrylat. Beispiele für Olefine und Diene sind Ethylen, Propylen und 1,3-Butadien. Geeignete Vinylaromaten sind Styrol und Vinyltoluol. Ein geeignetes Vinylhalogenid ist Vinylchlorid.

Gegebenenfalls können noch 0,05 bis 50 Gew.-%, vorzugsweise 1 bis 10 Gew.-%, bezogen auf das Gesamtgewicht des Basispolymerisats, Hilfsmonomere copolymerisiert werden. Beispiele für Hilfsmonomere sind ethylenisch ungesättigte Mono- und Dicarbonsäuren, vorzugsweise Acrylsäure, Methacrylsäure, Fumarsäure und Maleinsäure; ethylenisch ungesättigte Carbonsäureamide und -nitrile, vorzugsweise Acrylamid und Acrylnitril; Mono- und Diester der Fumarsäure und Maleinsäure wie die Diethyl- und Diisopropylester, sowie Maleinsäureanhydrid, ethylenisch ungesättigte Sulfonsäuren bzw. deren Salze, vorzugsweise Vinylsulfonsäure, 2-Acrylamido-2-methyl-propansulfonsäure. Weitere Beispiele sind vorvernetzende Comonomere wie mehrfach ethylenisch ungesättigte Comonomere, beispielsweise Divinyladipat, Diallylmaleat, Allylmethacrylat oder Triallylcyanurat, oder nachvernetzende Comonomere, beispielsweise Acrylamidoglykolsäure (AGA), Methylacrylamidoglykolsäuremethylester (MAGME), N-Methylolacrylamid (NMA), N-Methylolmethacrylamid (NMMA), N-Methylolallylcarbamat, Alkylether wie der Isobutoxyether oder Ester des N-Methylolacrylamids, des N-Methylolmethacrylamids und des N-Methylolallylcarbamats. Geeignet sind auch epoxidfunktionelle Comonomere wie Glycidylmethacrylat und Glycidylacrylat. Weitere Beispiele sind siliciumfunktionelle Comonomere, wie Acryloxypropyltri(alkoxy)- und Methacryloxypropyltri-(alkoxy)-Silane, Vinyltrialkoxysilane und Vinylmethyldialkoxysilane, wobei als Alkoxygruppen beispielsweise Methoxy-, Ethoxy- und Ethoxypropylenglykolether-Reste enthalten sein können. Genannt seien auch Monomere mit Hydroxy- oder CO-Gruppen, beispielsweise Methacrylsäure- und Acrylsäurehydroxyalkylester wie Hydroxyethyl-, Hydroxypropyl- oder Hydroxybutylacrylat oder -methacrylat sowie Verbindungen wie Diacetonacrylamid und Acetylacetoxyethylacrylat oder -methacrylat. Weitere geeignete Comonomere sind Vinylalkylether, wie beispielsweise Vinylmethylether, Vinylethylether, Vinylisobutylether, Vinyloctadecylether.

Beispiele für als Basispolymerisat geeignete Homo- und Mischpolymerisate sind Vinylacetat-Homopolymerisate, Mischpolymerisate von Vinylacetat mit Ethylen, Mischpolymerisate von Vinylacetat mit Ethylen und einem oder mehreren weiteren Vinylestern, Mischpolymerisate von Vinylacetat mit Ethylen und Acrylsäureester, Mischpolymerisate von Vinylacetat mit Ethylen und Vinylchlorid, Styrol-Acrylsäureester-Copolymerisate, Styrol-1,3-Butadien-Copolymerisate.

Bevorzugt werden Vinylacetat-Homopolymerisate; Mischpolymerisate von Vinylacetat mit 1 bis 40 Ges.-% Ethylen; Mischpolymerisate von Vinylacetat mit 1 bis 40 Gew.-% Ethylen und 1 bis 50 Gew.-% von einem oder mehreren weiteren Comonomeren aus der Gruppe Vinylester mit 1 bis 15 C-Atomen im Carbonsäurerest wie Vinylpropionat, Vinyldodecanoat, Vinylester von alpha-verzweigten Carbonsäuren mit 9 bis 13 C-Atomen wie VeoVa9®, VeoVa10®, VeoVa11®; Mischpolymerisate von Vinylacetat, 1 bis 40 Gew.-% Ethylen und vorzugsweise 1 bis 60 Gew.-% Acrylsäureester von unverzweigten oder verzweigten Alkoholen mit 1 bis 15 C-Atomen, insbesonders n-Butylacrylat oder 2-Ethylhexylacrylat; und Mischpolymerisate mit 30 bis 75 Gew.-% Vinylacetat, 1 bis 30 Gew.-% Vinyllaurat oder Vinylester einer alpha-verzweigten Carbonsäure mit 9 bis 13 C-Atomen, sowie 1 bis 30 Gew.-% Acrylsäureester von unverzweigten oder verzweigten Alkoholen mit 1 bis 15 C-Atomen, insbesonders n-Butylacrylat oder 2-Ethylhexylacrylat, welche noch 1 bis 40 Gew.-% Ethylen enthalten;
Mischpolymerisate mit Vinylacetat, 1 bis 40 Gew.-% Ethylen und 1 bis 60 Gew.-% Vinylchlorid; wobei die Polymerisate noch die genannten Hilfsmonomere in den genannten Mengen enthalten können, und sich die Angaben in Gew.-% auf jeweils 100 Gew.-% aufaddieren.

Bevorzugt werden auch (Meth)acrylsäureester-Polymerisate, wie Mischpolymerisate von n-Butylacrylat oder 2-Ethylhexylacrylat oder Copolymerisate von Methylmethacrylat mit n-Butylacrylat und/oder 2-Ethylhexylacrylat und gegebenenfalls Ethylen; Styrol-(Meth)acrylsäureester-Copolymerisate mit einem oder mehreren Monomeren aus der Gruppe Methylacrylat, Ethylacrylat, Propylacrylat, n-Butylacrylat, 2-Ethylhexylacrylat;
Vinylacetat-(Meth)acrylsäureester-Copolymerisate mit einem oder mehreren Monomeren aus der Gruppe Methylacrylat, Ethylacrylat, Propylacrylat, n-Butylacrylat, 2-Ethylhexylacrylat und gegebenenfalls Ethylen;
Styrol-1,3-Butadien-Copolymerisate;
wobei die Polymerisate noch die genannten Hilfsmonomere in den genannten Mengen enthalten können, und sich die Angaben in Gew.-% auf jeweils 100 Gew.-% aufaddieren.

Die Monomerauswahl bzw. die Auswahl der Gewichtsanteile der Comonomere erfolgt dabei so, dass im allgemeinen eine Glasübergangstemperatur Tg von -50°C bis +50°C, vorzugsweise -30°C bis +10°C resultiert. Die Glasübergangstemperatur Tg der Polymerisate kann in bekannter Weise mittels Differential Scanning Calorimetry (DSC) ermittelt werden. Die Tg kann auch mittels der Fox-Gleichung näherungsweise vorausberechnet werden. Nach Fox T. G., Bull. Am. Physics Soc. 1, 3, page 123 (1956) gilt: 1/Tg = x1/Tg1 + x2/Tg2 + ... + xn/Tgn, wobei xn für den Massebruch (Gew.-%/100) des Monomeren n steht, und Tgn die Glasübergangstemperatur in Kelvin des Homopolymeren des Monomeren n ist. Tg-Werte für Homopolymerisate sind in Polymer Handbook 2nd Edition, J. Wiley & Sons, New York (1975) aufgeführt.

Die Herstellung der Homo- und Mischpolymerisate erfolgt bevorzugt nach dem Emulsionspolymerisationsverfahren, wobei die Polymerisationstemperatur im allgemeinen, aber nicht notwendigerweise < 100°C beträgt.
Die Polymerisation kann unabhängig vom Polymerisationsverfahren mit oder ohne Verwendung von Saatlatices, unter Vorlage aller oder einzelner Bestandteile des Reaktionsgemisches, oder unter teilweiser Vorlage und Nachdosierung der oder einzelner Bestandteile des Reaktionsgemische, oder nach dem Dosierverfahren ohne Vorlage durchgeführt werden. Die Comonomere können zur Herstellung der Dispersion alle vorgelegt werden (Batch-Prozess), oder es wird ein Teil der Monomere vorgelegt und der Rest dosiert (Semibatch-Prozess).

Die Initiierung der Polymerisation erfolgt mit den für die Emulsionspolymerisation gebräuchlichen wasserlöslichen Initiatoren oder Redox-Initiator-Kombinationen. Beispiele für wasserlösliche Initiatoren sind die Natrium-, Kalium- und Ammoniumsalze der Peroxodischwefelsäure, Wasserstoffperoxid, tert.-Butylperoxid, tert.-Butylhydroperoxid, Kaliumperoxodiphosphat, tert.-Butylperoxopivalat, Cumolhydroperoxid, Isopropylbenzolmonohydroperoxid Azobisisobutyronitril. Die genannten Initiatoren werden im allgemeinen in einer Menge von 0,001 bis 0,02 Gew.-%, vorzugsweise 0,001 bis 0,01 Gew.-%, jeweils bezogen auf das Gesamtgewicht der Monomere, eingesetzt. Als RedoxInitiatoren verwendet man Kombinationen aus den genannten Initiatoren in Kombination mit Reduktionsmitteln. Geeignete Reduktionsmittel sind die Sulfite und Bisulfite der Alkalimetalle und von Ammonium, beispielsweise Natriumsulfit, die Derivate der Sulfoxylsäure wie Zink- oder Alkaliformaldehydsulfoxylate, beispielsweise Natriumhydroxymethansulfinat, und Ascorbinsäure. Die Reduktionsmittelmenge beträgt im allgemeinen 0,001 bis 0,03 Gew.-%, vorzugsweise 0,001 bis 0,015 Gew.-%, jeweils bezogen auf das Gesamtgewicht der Monomere.

Zur Steuerung des Molekulargewichts können während der Polymerisation regelnde Substanzen eingesetzt werden. Falls Regler eingesetzt werden, werden diese üblicherweise in Mengen zwischen 0,01 bis 5,0 Gew.-%, bezogen auf die zu polymerisierenden Monomeren, eingesetzt und separat oder auch vorgemischt mit Reaktionskomponenten dosiert. Beispiele solcher Substanzen sind n-Dodecylmercaptan, tert.-Dodecylmercaptan, Mercaptopropionsäure, Mercaptopropionsäuremethylester, Isopropanol und Acetaldehyd.

Die Polymerisation erfolgt in Gegenwart von nichtionischem Schutzkolloid. Geeignete nichtionische Schutzkolloide sind Polyvinylalkohole, Polyvinylacetale, Polyvinylpyrrolidone, Polysaccharide in wasserlöslicher Form wie Stärken (Amylose und Amylopectin), Cellulosen und deren Methyl-, Hydroxyethyl-, Hydroxypropyl-Derivate, Poly(meth)acrylamid.

Bevorzugt werden teilverseifte oder vollverseifte Polyvinylalkohole mit einem Hydrolysegrad von 80 bis 100 Mol-%, insbesondere teilverseifte Polyvinylalkohole mit einem Hydrolysegrad von 80 bis 95 Mol-% und einer Höpplerviskosität, in 4 %-iger wässriger Lösung von 1 bis 30 mPas (Methode nach Höppler bei 20°C, DIN 53015). Bevorzugt sind auch teilverseifte, hydrophob modifizierte Polyvinylalkohole mit einem Hydrolysegrad von 80 bis 95 Mol-% und einer Höpplerviskosität, in 4 %-iger wässriger Lösung von 1 bis 30 mPas. Beispiele hierfür sind teilverseifte Copolymerisate von Vinylacetat mit hydrophoben Comonomeren wie Isopropenylacetat, Vinylpivalat, Vinylethylhexanoat, Vinylester von gesättigten alpha-verzweigten Monocarbonsäuren mit 5 oder 9 bis 13 C-Atomen, Dialkylmaleinate und Dialkylfumarate wie Diisopropylmaleinat und Diisopropylfumarat, Vinylchlorid, Vinylalkylether wie Vinylbutylether, Olefine wie Ethen und Decen. Der Anteil der hydrophoben Einheiten beträgt vorzugsweise 0,1 bis 10 Gew.-%, bezogen auf das Gesamtgewicht des teilverseiften Polyvinylalkohols. Es können auch Gemische der genannten Polyvinylalkohole eingesetzt werden.

Am meisten bevorzugt werden Polyvinylalkohole mit einem Hydrolysegrad von 85 bis 94 Mol-% und einer Höpplerviskosität, in 4 %iger wässriger Lösung von 3 bis 15 mPas (Methode nach Höppler bei 20°C, DIN 53015). Die genannten Schutzkolloide sind mittels dem Fachmann bekannter Verfahren zugänglich und werden im allgemeinen in einer Menge von insgesamt 1 bis 20 Gew.-%, bezogen auf das Gesamtgewicht der Monomere, bei der Polymerisation zugesetzt.

Die Polymerisation wird in Gegenwart von nichtionischen Emulgatoren durchgeführt oder in Gegenwart der genannten nichtionischen Schutzkolloide in Kombination mit nichtionischen Emulgatoren. Geeignete nichtionische Emulgatoren sind Tenside wie Alkylpolyglykolether oder Alkylarylpolyglykolether mit 8 bis 40 Alkylenoxid-Einheiten. Bevorzugt werden alkoxylierte C₈- bis C₁₆-Alkanole, welche mit C₂- bis C₄-Alkylenoxiden, insbesondere Ethylenoxid und Propylenoxid oder deren Gemische, alkoxyliert sind. Die nichtionischen Emulgatoren werden im allgemeinen in einer Menge von 0.05 bis 10 Gew.-%, bezogen auf das Gesamtgewicht der Monomere, bei der Polymerisation zugesetzt.

Nach Abschluss der Polymerisation kann zur Restmonomerentfernung in Anwendung bekannter Methoden nachpolymerisiert werden, im allgemeinen durch mit Redoxkatalysator initiierter Nachpolymerisation. Flüchtige Restmonomere können auch mittels Destillation, vorzugsweise unter reduziertem Druck, und gegebenenfalls unter Durchleiten oder Überleiten von Luft oder Wasserdampf oder von inerten Schleppgasen wie Stickstoff entfernt werden. Die damit erhältlichen wässrigen Dispersionen haben einen Feststoffgehalt von 30 bis 75 Gew.-%, vorzugsweise von 50 bis 60 Gew.-%.

Zur Herstellung der in Wasser redispergierbaren Polymerpulver werden die wässrigen Dispersionen, nach Zusatz der kationischen Schutzkolloide als Trocknungshilfe, getrocknet. Das kationische Schutzkolloid kann dabei auch in Kombination mit nichtionischem Schutzkolloid oder in Kombination mit nichtionischem Emulgator eingesetzt werden. Dazu geeignete nichtionische Schutzkolloide und nichtionische Emulgatoren sind die bereits vorher bei der Polymerisation als geeignet genannten nichtionischen Schutzkolloide und nichtionischen Emulgatoren.

Die Trocknung erfolgt beispielsweise mittels Wirbelschichttrocknung, Gefriertrocknung oder Sprühtrocknung. Vorzugsweise werden die Dispersionen sprühgetrocknet. Die Sprühtrocknung erfolgt dabei in üblichen Sprühtrocknungsanlagen, wobei die Zerstäubung mittels Ein-, Zwei- oder Mehrstoffdüsen oder mit einer rotierenden Scheibe erfolgen kann. Die Austrittstemperatur wird im allgemeinen im Bereich von 45°C bis 120°C, bevorzugt 60°C bis 90°C, je nach Anlage und gewünschtem Trocknungsgrad, gewählt.

Das kationische Schutzkolloid wird gegebenenfalls in Kombination mit nichtionischem Schutzkolloid und/oder nichtionischem Emulgator, in einer Menge von insgesamt 0,1 bis 20 Gew.-%, bevorzugt 1 bis 7 Gew.-%, jeweils bezogen auf die polymeren Bestandteile der Dispersion, eingesetzt.

Bei der Trocknung hat sich vielfach ein Gehalt von bis zu 2 Gew.-% Antischaummittel, bezogen auf das Basispolymerisat, als günstig erwiesen. Zur Erhöhung der Lagerfähigkeit durch Verbesserung der Verblockungsstabilität, insbesondere bei Pulvern mit niedriger Glasübergangstemperatur, kann das erhaltene Pulver mit einem Antiblockmittel (Antibackmittel), vorzugsweise bis 30 Gew.-%, bezogen auf das Gesamtgewicht polymerer Bestandteile, ausgerüstet werden. Beispiele für Antiblockmittel sind Ca- bzw. Mg-Carbonat, Talk, Gips, Kieselsäure, Kaoline, Metakaoline, Silicate mit Teilchengrößen vorzugsweise im Bereich von 10 nm bis 100 µm.

Die Viskosität der zu zerstäubenden und zu trocknenden Mischung wird über den Feststoffgehalt so eingestellt, dass ein Wert von < 1000 mPas (Brookfield-Viskosität bei 20 Umdrehungen und 23°C), bevorzugt < 500 mPas, vor allem bevorzugt <250 mPas erhalten wird. Der Feststoffgehalt der zu zerstäubenden Mischung sollte > 30 Gew.-%, bevorzugt > 40 Gew.-% betragen.

Zur Verbesserung der anwendungstechnischen Eigenschaften können vor oder während oder nach der Trocknung weitere Zusätze zugegeben werden. Weitere, in bevorzugten Ausführungsformen enthaltene Bestandteile von Dispersionspulverzusammensetzungen sind beispielsweise Pigmente, Füllstoffe, Schaumstabilisatoren, Hydrophobierungsmittel, Weichmacher.

Die kationisch stabilisierten und in Wasser redispergierbaren Polymerpulver-Zusammensetzungen können in den dafür typischen Anwendungsbereichen eingesetzt werden. Es können auch Abmischungen der kationisch stabilisierten Dispersionspulver mit herkömmlichen Dispersionspulvern eingesetzt werden.

Beispiele für Anwendungen sind die in bauchemischen Produkten, gegebenenfalls in Verbindung mit hydraulisch abbindenden Bindemitteln wie Zementen (Portland-, Aluminat-, Trass-, Hütten-, Magnesia-, Phosphatzement), Gips und Wasserglas, für die Herstellung von Bauklebern, insbesondere Fliesenkleber (beispielsweise Hochflexkleber) und Vollwärmeschutzkleber, Putzen, Spachtelmassen, Fußbodenspachtelmassen, Verlaufsmassen, Dichtschlämmen, Fugenmörtel und Farben. Bevorzugte Anwendungsgebiete sind Dichtschlämmen und Fliesenkleber, insbesondere auch Fliesenkleber für Holzuntergründe. Weitere mögliche Anwendungen ergeben sich durch den Einsatz im Klebstoff- und Coatingbereich, letztere beispielsweise für Papier und Textil.

Überraschenderweise werden bei dem erfindungsgemäßen Vorgehen Dispersionspulver erhalten, die trotz eines geringen Anteils von bevorzugt 1 bis 7 Gew.-% an kationischen Polymeren als Trocknungshilfsmittel blockstabile und sehr gut redispergierbare Pulver ergeben. Überraschenderweise wurde auch gefunden, dass das kationische Polymer sich nicht nur positiv auf die Verarbeitung in polymervergüteten Massen, wie beispielsweise Dichtungsschlämmen, Fliesenklebern, Putzen auswirkt, sondern auch dazu führt, dass die Flexibilität solcher Massen, zum Beispiel hinsichtlich Reißdehnung einer polymervergüteten Dichtungsschlämme, verbessert wird.

### Beispiele:

### Dispersion 1 (D1):

Als Ausgangsdispersion diente eine mit 6 Gew.-% Polyvinylalkohol mit einem Verseifungsgrad von 88 Mol-% und einer Viskosität nach Höppler von 4 mPas hergestellte Vinylacetat-Ethylen-Copolymerdispersion mit einem Feststoffgehalt von 50 Gew.-% und einer Tg von -7°C.

### Dispersion 2 (D2):

Als Ausgangsdispersion diente eine mit 5 Gew.-% Polyvinylalkohol mit einem Verseifungsgrad von 88 Mol-% und einer Viskosität nach Höppler von 4 mPas hergestellte Vinylacetat-Ethylen-VeoVa10-Copolymerdispersion mit einem Feststoffgehalt von 52 Gew.-% und einer Tg von -15°C.

### Dispersion 3 (D3):

Als Ausgangsdispersion diente eine mit 6 Gew.-% Polyvinylalkohol mit einem Verseifungsgrad von 88 Mol-% und einer Viskosität nach Höppler von 4 mPas hergestellte Vinylacetat-Ethylen-Vinyldodecanoat-Copolymerdispersion mit einem Feststoffgehalt von 50 Gew.-% und einer Tg von -24°C.

### Dispersion 4 (D4):

Als Ausgangsdispersion diente eine mit je 2,5 Gew.-% Polyvinylalkohol mit einem Verseifungsgrad von 88 Mol-% und einer Viskosität nach Höppler von 4 mPas und 13 mPas hergestellte Ethylhexylacrylat-Methylmethacrylat-Copolymerdispersion mit einem Feststoffgehalt von 51 Gew.-% und einer Tg von -13°C.

### Dispersion 5 (D5):

Als Ausgangsdispersion diente eine mit 8 Gew.-% Polyvinylalkohol mit einem Verseifungsgrad von 88 Mol-% und einer Viskosität nach Höppler von 4 mPas hergestellte Vinylacetat-Ethylen-Copolymerdispersion mit einem Feststoffgehalt von 55 Gew.-% und einer Tg von 16°C.

### Dispersion 6 (D6):

Als Ausgangsdispersion diente eine mit 10 Gew.-% Polyvinylalkohol mit einem Verseifungsgrad von 88 Mol-% und einer Viskosität nach Höppler von 4 mPas hergestellte Vinylacetat-Ethylen-VeoVa10-Copolymerdispersion mit einem Feststoffgehalt von 55 Gew.-% und einer Tg von 5°C.

### Dispersion 7 (D7):

Als Ausgangsdispersion diente eine mit 10 Gew.-% Polyvinylalkohol mit einem Verseifungsgrad von 88 Mol-% und einer Viskosität nach Höppler von 4 mPas hergestellte Styrol-Butylacrylat-Copolymerdispersion mit einem Feststoffgehalt von 55 Gew.-% und einer Tg von 20°C.

### Schutzkolloid 1 (SK 1):(Poly-METAC)

Ein Gemisch aus 795 g Wasser und 201 g 2-Methacryloxyethyltrimethylammoniumchlorid wurde in einem Polymerisationsgefäß vorgelegt und auf 73°C erhitzt. Innerhalb von 180 Min. wurden 20,12 g einer 10 %igen Initiatorlösung (VA-044: 2,2'-Azobis[2-(2-imidazolin-2-yl)propan]dihydrochlorid) kontinuierlich dosiert. Die Reaktionslösung wurde noch 30 Min. bei 73°C gerührt und dann abgekühlt. Es wurde eine gelblich klare Lösung mit 19,8 Gew.-% und einem pH-Wert von 3,1 erhalten. Der K-Wert der 1 %igen Polymerlösung in Wasser betrug 75,9. Die Höppler-Viskosität einer 4 %igen wässrigen Lösung betrug 7,8 mPas.

### Schutzkolloid 2 (SK 2): (Poly-MAPTAC)

Ein Gemisch aus 988 g Wasser und 6,8 g einer 50 %igen wässrigen Essigsäurelösung wurde auf 80°C erwärmt. Nach Erreichen des Temperaturgleichgewichts wurden gleichzeitig über 180 Min. 96 g einer 7 %-igen Initiatorlösung (VA-044: 2,2'-Azobis[2-(2-imidazolin-2-yl)propan]dihydrochlorid) sowie 910 g einer 50 %igen wässrigen 2-Methacrylamidopropyltrimethylammoniumchlorid-Lösung kontinuierlich dosiert. Die Reaktionslösung wurde noch 60 Min. bei 80°C gerührt und dann abgekühlt. Es wurde eine gelblich klare Lösung mit 25,4 Gew.-% und einem pH-Wert von 3,4 erhalten. Der K-Wert der 1 %igen Polymerlösung in Wasser war 29. Die Höppler-Viskosität der 4 %igen wässrigen Lösung betrug 1,9 mPas.

Käufliche Schutzkolloide auf Basis Poly-DADMAC wie Catiofast® CS der Fa. BASF oder Superfloc® C-592 der Fa. Cytec sind ebenfalls geeignete Schutzkolloide zur Herstellung von kationischen Dispersionspulvern.

### Schutzkolloid 4 (SK4):

Catiofast® CS: 30 %-ige wässrige Lösung; K-Wert einer 1 %igen Polymerlösung in Wasser beträgt 72. Die Höppler-Viskosität einer 4 %-igen wässrigen Lösung beträgt 7,5 mPas.

### Schutzkolloid 5 (SK5):

Superfloc® C-592: 39 %-ige wässrige Lösung; K-Wert einer 1 %igen Polymerlösung in Wasser beträgt 92. Die Höppler-Viskosität einer 4 %-igen wässrigen Lösung beträgt 12,2 mPas.

### Pulver:

Die Ausgangsdispersionen D1 bis D7 wurden mit den Schutzkolloiden SK1 bis SK5, in den in Tabelle 1 angegebenen Gewichtsverhältnissen, sowie unter Zugabe von 0,5 Gew.-% Entschäumer, bezogen auf Feststoffgehalt des filmbildenden Polymers, vermischt, 30 Min. gerührt und abfiltriert. In keiner der in Tabelle 1 dargestellten Kombinationen wurde Koagulat gebildet. Die Mischungen werden unter Zugabe von 12 Gew.-% Antiblockmittel bezogen auf Festanteil Dispersion zu den Pulvern P1 bis P11 sprühgetrocknet.

### Vergleichsbeispiel 1 (P12):

Die Ausgangsdispersion D2 wurde mit 9 Gew.-% eines Polyvinylalkoholes mit einem Verseifungsgrad von 88 Mol-% und einer Viskosität nach Höppler von 4 mPas versetzt. Nach Zugabe von 0,5 Gew.-% Entschäumer wurde die Mischung 30 Min. gerührt und abfiltriert. Die Mischung wurde unter Zugabe von 12 Gew.-% Antiblockmittel, bezogen auf Feststoffanteil Dispersion, sprühgetrocknet.

### Vergleichsbeispiel 2 (P13):

Als Ausgangsdispersion (D8) diente eine mit 12 Gew.-% Catiofast® CS hergestellte Vinylacetat-Ethylen-Copolymerdispersion mit einem Feststoffgehalt von 49 Gew.-% und einer Tg von -5°C. Versuche, eine Dispersion mit geringerem Schutzkolloidanteil < 10 Gew.-% zu erhalten, schlugen fehl. Die Dispersion (D8) wurde mit 6 Gew.-% eines Polyvinylalkohols mit einem Verseifungsgrad von 88 Mol-% und einer Viskosität nach Höppler von 4 mPas versetzt. Nach Zugabe von 0,5 Gew.-% Entschäumer wurde die Mischung 30 Min. gerührt und abfiltriert. Die Mischung wurde unter Zugabe von 12 Gew.-% Antiblockmittel, bezogen auf Feststoffanteil Dispersion, sprühgetrocknet. Hierbei wurde kein blockstabiles Pulver erhalten.

### Vergleichsbeispiel 3 (P14):

Als Ausgangsdispersion diente eine mit 6 Gew.-% Polyvinylalkohol mit einem Verseifungsgrad von 88 Mol-% und einer Viskosität nach Höppler von 4 mPas hergestellte Vinylacetat-Ethylen-Copolymerdispersion mit einem Feststoffgehalt von 55 Gew.-% und einer Tg von 10°C (D9). Diese wurde mit 8 Gew.-% eines Polyvinylalkoholes mit einem Verseifungsgrad von 88 Mol-% und einer Viskosität nach Höppler von 4 mPas versetzt. Die Mischung wurde 30 Min. gerührt und abfiltriert. Die Mischung wurde unter Zugabe von 12 Gew.-% Antiblockmittel, bezogen auf Feststoffanteil Dispersion, zu Pulver P14 sprühgetrocknet.

### Ausprüfung:

Die erhaltenen Pulver wurden auf ihre Pulvereigenschaften und auf die Verarbeitung in einer Dichtschlämme untersucht.

### Bestimmung der Blockfestigkeit (BF):

Zur Bestimmung der Blockfestigkeit wurde das Dispersionspulver in ein Eisenrohr mit Verschraubung gefüllt und danach mit einem Metallstempel belastet. Unter Belastung wurde im Trockenschrank 16 Stunden bei 50°C gelagert. Nach dem Abkühlen auf Raumtemperatur wurde das Pulver aus dem Rohr entfernt und die Blockstabilität qualitativ durch Zerdrücken des Pulvers bestimmt. Die Blockstabilität wurde wie folgt klassifiziert:
1 = sehr gute Blockstabilität, keine Klumpenbildung
2 = gute Blockstabilität
3 = befriedigende Blockstabilität
4 = nicht blockstabil, Pulver nach Zerdrücken nicht mehr rieselfähig.

### Bestimmung des Absitzverhaltens (Röhrenabsitz, RA):

Das Absitzverhalten der Redispersion dient als Maß für die Redispergierbarkeit der Pulvers. Die Redispersionen wurden 50 %ig in Wasser durch Einwirkung von starken Scherkräften erzeugt.
Das Absitzverhalten wurde dann an verdünnten Redispersionen (0,5 % Festgehalt) bestimmt. 100 ml dieser Dispersion wurde in eine graduierte Röhre gefüllt und die Absitzhöhe an Feststoff gemessen. Die Angabe erfolgt in mm Absitz nach 24 Stunden. Werte größer 7 zeigen eine unzureichende Redispersion des Pulvers an.

Die Ergebnisse der Prüfung der Blockfestigkeit (BF) und des Absitzverhaltens (RA) der Dispersionspulver sind in Tabelle 1 zusammengefasst.

**Tabelle 1:**

| Pulver-Nr. | Dispersion | Schutzkolloid | BF | RA |
|---|---|---|---|---|
| P1 | D1 | 5 Gew.-% SK 1 | 2 | 2 |
| P2 | D2 | 6 Gew.-% SK 1 | 2 | 1, 8 |
| P3 | D2 | 6 Gew.-% SK 2 | 1-2 | 1,4 |
| P4 | D1 | 3,5 Gew.-% SK 4 | 2 | 1,5 |
| P5 | D2 | 3,5 Gew.-% SK 4 | 1 | 1,6 |
| P6 | D3 | 2 Gew.-% SK 4 | 2 | 3,0 |
| P7 | D4 | 4 Gew.-% SK 4 | 2 | 2,5 |
| P8 | D1 | 5 Gew.-% SK 5 | 1 | 1,1 |
| P9 | D5 | 5 Gew.-% SK 4 | 1 | 1,6 |
| P10 | D6 | 5 Gew.-% SK 4 | 1-2 | 1,0 |
| P11 | D7 | 5 Gew.-% SK 4 | 1 | 1,4 |
| P12(Vbsp.) | D2 | 9 Gew.-% PVA | 2 | 0,7 |
| P13(Vbsp.) | D8 | 6 Gew.-% PVA | 4 | 7 |
| P14 (Vbsp.) | D9 | 8 Gew.-% PVA | 2 | 1,8 |

Das Vergleichsbeispiel P13 zeigt, dass bei einer Vorgehensweise, bei der das kationische Schutzkolloid während der Polymerisation eingesetzt wird, Produkte erhalten werden, welche sich nicht redispergieren lassen und nicht blockstabil sind.

Für die Herstellung einer zementären Dichtschlämme wurde folgende Rezeptur herangezogen:

| | |
|---|---|
| Quarzsand | 665 Teile |
| Portlandzement | 50 Teile |
| Cellulose | 5 Teile |
| Dispersionspulver | 280 Teile |
| Wasser | 400 Teile |

Die Einschätzung des Verarbeitungsverhaltens (VA) erfolgt während des Anmischens der Trockenkomponenten mit Wasser. Das Verarbeitungsverhalten der Dichtungsschlämme ist ein subjektives Empfinden des Verarbeiters. Die Verarbeitung wurde wie folgt klassifiziert:
1 = sehr gute, geschmeidige Verarbeitung, keine Kellenklebrigkeit
2 = etwas schwergängige Verarbeitung, geringe Kellenklebrigkeit
3 = unzureichende Verarbeitung, zäh und klebrig

Mit Hilfe einer Rakel der Spaltbreite 2 mm wurde die zementäre Dichtungsschlämme zu einem Film gezogen und dieser bei Normklima (23°C, 50 % relative Feuchtigkeit) 7 d getrocknet. Die erhaltenen Filme wurden in ihrer Flexibilität und Verformbarkeit beurteilt. Diese wurden wie folgt klassifiziert:
1 = sehr gut verformbarer, homogener, glatter Film
2 = gut verformbarer, glatter Film
3 = wenig verformbarer, glatter Film
4 = schlecht verformbarer, spröder Film

Die Bestimmung der Reißfestigkeit(RF in MPas) und Reißdehnung (RD in %) der Proben erfolgte im Zugversuch nach DIN 53455.

Die Ergebnisse zur Verarbeitung, Flexibilität sowie der Reißfestigkeit und Reißdehnung nach 28 d Normklimalagerung sind in Tabelle 2 wiedergegeben.

**Tabelle 2:**

| Pulver-Nr. | VA | Flexibilität | RF (MPa) | RD (%) |
|---|---|---|---|---|
| P4 | 1 - 2 | 1 | 1,6 | 100 |
| P5 | 1 | 1 | 1,4 | 105 |
| P7 | 1 - 2 | 2 | 1,5 | 92 |
| P12 (Vbsp.) | 3 | 3 | 1,6 | 41 |

Für die Herstellung eines zementären Hochflexklebers wurde folgende Rezeptur herangezogen:

| | |
|---|---|
| Quarzsand | 576 Teile |
| Zement (Mischung aus Portland- und Aluminatzement) | 300 Teile |
| Celluloseether | 4 Teile |
| Dispersionspulver | 120 Teile |
| Wasser | 240 Teile |

Die Einschätzung des Verarbeitungsverhaltens (VA) (Skala wie oben beschrieben) erfolgt während des Anmischens der Trockenkomponenten mit Wasser und ist in Tabelle 3 wiedergegeben.

Die Ermittlung der Haftzugswerte in N/mm² erfolgte nach EN 12004 (Prüfnorm EN 1348).
Lagerung A: 28 d Normklima;
Lagerung B: 7 d Normklima / 21 d Wasserlagerung;
Lagerung C: 14 d Normklima / 14 d Wärmelagerung bei 70°C / 1d Normklima;
Lagerung D: 7 d Normklima / 21 d Wasserlagerung / 5 d 25 Frost-Tau-Wechsel).

Die Ergebnisse sind in Tabelle 3 dargestellt.

Die Ermittlung der Verformbarkeit in mm wurde nach EN 12002 durchgeführt. Ergebnisse der verschiedenen Dispersionspulver sind in Tabelle 3 dargestellt.

**Tabelle 3:**

| Pulver-Nr. | Verarbeitung | Haftzugswerte (N/mm²) | | | | Verformbarkeit (mm) |
|---|---|---|---|---|---|---|
| | | Lag.A | Lag.B | Lag.C | Lag.D | |
| P9 | 1 | 1,84 | 1,01 | 2,36 | 1,00 | 11,0 |
| P10 | 1 | 1,83 | 1,05 | 2,31 | 1,07 | 11,2 |
| P11 | 1 | 2,15 | 1,04 | 2,4 | 1,08 | 11,7 |
| P14(Vbsp.) | 2-3 | 2,12 | 1,11 | 2,76 | 1,04 | 11,6 |

Aus den Daten ist zu erkennen, dass bei der Herstellung der erfindungsgemäßen Produkte keine Probleme in Bezug auf Koagulatbildung während der Mischungsherstellung von Dispersion und kationischem Schutzkolloid und Additiven auftreten. Des weiteren werden blockstabile Pulver auch mit sehr geringen Mengen an katiönischem Schutzkolloid erhalten, die sehr gute Redispergiereigenschaften aufweisen. Darüber hinaus werden sehr gute Verarbeitungseigenschaften auch bei hohen Polymeranteilen, wie beispielsweise in Dichtungsschlämm- oder Fliesenkleberrezepturen, erzielt.

Die Tabellen 2 und 3 zeigen, dass gegenüber herkömmlichen Pulvern wie P12 und P14, welche ausschließlich mit Polyvinylalkohol stabilisiert sind, die erfindungsgemäß hergestellten Pulver in Anwendungen, bei denen hohe Mengen an Dispersionspulver eingesetzt werden, verbesserte Elastizität und Verarbeitbarkeit zeigen.

## Patentansprüche

1. Verfahren zur Herstellung von kationisch stabilisierten und in Wasser redispergierbaren Polymerpulverzusammensetzungen, wobei ein oder mehrere ethylenisch ungesättigte Monomere in Gegenwart eines nichtionischen Schutzkolloids und/oder eines nichtionischen Emulgators in wässrigem Medium radikalisch polymerisiert werden und anschließend getrocknet werden, **dadurch gekennzeichnet, dass** die dabei erhaltenen wässrigen Polymerdispersionen nach Zusatz von 0,1 bis 20 Gew.-%, bezogen auf die polymeren Bestandteile der wässrigen Polymerdispersion eines kationischen Schutzkolloids aus der Gruppe bestehend aus Homo- oder Mischpolymerisate von einem oder mehreren kalionischen Monomeren aus der Gruppe bestehend aus Diallyldimethylammoniumchlorid (DADMAC), Diallyldiethylammoniumchiorid (DADEAC), (3-Methacryloxy)propyltrimethylammoniumchlorid (MPTAC),(3-Methacryloxy)ethyltrimethylammoniumchlorid (METAC), (3-Methacrylamido)propyltrimethylammoniumchlorid (MAPTAC), 2-Dimethylaminoethylmethacrylat oder 3-Dimethylaminopmpylmemacrylamid (DMAEMA oder DMAPMA) als Trocknungshilfsmittel getrocknet werden.

2. Verfahren nach Anspruch 1, **dadurch gekennzeichnet, dass** als kationische Schutzkolloide Polymere eingesetzt werden, welche Monomereinheiten mit quarternären Ammoniumgruppen enthalten.

3. Verfahren nach Anspruch 1 bis 2, **dadurch gekennzeichnet, dass** kationische Schutzkolloide mit einem K-Wert (Bestimmung in Anlehnung an DIN 53726, 1 Gew.-% in Wasser, 25°C, Ubbelohde-Viskosimeter) von 10 bis 250 eingesetzt werden.

4. Verfahren nach Anspruch 1 bis 3, **dadurch gekennzeichnet, dass** kationische Schutzkolloide mit einer Höppler-Viskosität von 1 bis 50 mPas (Bestimmung mit der Methode nach Höppler bei 20°C gemäß DIN 53015) eingesetzt werden.

5. Verfahren nach Anspruch 1 bis 4, **dadurch gekennzeichnet, dass** als ethylenisch ungesättigte Monomere ein oder mehrere aus der Gruppe umfassend Vinylester von unverzweigten oder verzweigten Alkylcarbonsäuren mit 1 bis 15 C-Atomen, Methacrylsäureester und Acrylsäureester von Alkoholen mit 1 bis 15 C-Atomen, Vinylaromaten, Olefine, Diene und Vinylhalogenide polymerisiert werden.

6. Verwendung der Verfahrensprodukte nach Anspruch 1 bis 5 in bauchemischen Produkten für die Herstellung von Bauklebern, Putzen, Spachtelmassen, Fußbodenspachtelmassen, Verlaufsmassen, Dichtschlämmen, Fugenmörtel und Farben.

7. Verwendung der Verfahrensprodukte nach Anspruch 1 bis 5 im Klebstoff- und Coatingbereich.

## Claims

1. Process for preparation of cationically stabilized and water-redispersible polymer powder compositions, where one or more ethylenically unsaturated monomers are subjected to free-radical polymerization in an aqueous medium in the presence of a non-ionic protective colloid and/or of a non-ionic emulsifier, and then dried, **characterized in that** the resultant aqueous polymer dispersions are dried following addition of from 0.1 to 20% by weight, based on the polymeric constituents of the aqueous polymer dispersion, of a cationic protective colloid from the group consisting of homo- or copolymers of one or more cationic monomers from the group consisting of diallyldimethylammonium chloride (DADMAC), diallyldiethylammonium chloride (DADEAC), (3-methacryloxy)propyltrimethylammonium chloride (MPTAC), (3-methacryloxy) ethyltrimethylammonium chloride (METAC), (3-methacrylamido)propyl-trimethylammonium chloride (MAPTAC), 2-dimethyl-aminoethyl methacrylate or 3-dimethylaminopropyl-methacrylamide (DMAEMA or DMAPMA) as drying aid.

2. Process according to Claim 1, **characterized in that** the cationic protective colloids used comprise polymers which contain monomer units having quaternary ammonium groups.

3. Process according to either of Claims 1 and 2, **characterized in that** cationic protective colloids whose K value (determined by a method based on DIN 53726, 1% by weight in water, 25°C, Ubbelohde viscosimeter) is from 10 to 250 are used.

4. Process according to any of Claims 1 to 3, **characterized in that** cationic protective colloids whose Höppler viscosity is from 1 to 50 mPas (determined by the Höppler method at 20°C to DIN 53015) are used.

5. Process according to any of Claims 1 to 4, **characterized in that** the ethylenically unsaturated monomers polymerized comprise one or more from the group consisting of vinyl esters of unbranched or branched alkylcarboxylic acids having from 1 to 15 carbon atoms, methacrylates and acrylates of alcohols having from 1 to 15 carbon atoms, vinylaromatics, olefins, dienes and vinyl halides.

6. Use of the process products according to any of Claims 1 to 5 in construction-chemistry products for production of construction adhesives, renders, trowelling compounds, floor-filling compositions, levelling compositions, sealing slurries, jointing mortars and paints.

7. Use of the process products according to any of Claims 1 to 5 in the adhesive and coating sector.

## Revendications

1. Procédé pour la préparation de compositions de poudre polymère stabilisées cationiquement et redispersibles dans l'eau, où un ou plusieurs monomères éthyléniquement insaturés sont polymérisés par voie radicalaire en présence d'un colloïde de protection non ionique et/ou d'un émulsifiant non ionique, en milieu aqueux, puis sont séchés, **caractérisé en ce que** les dispersions polymères aqueuses ainsi obtenues sont séchées après addition de 0,1 à 20% en poids, par rapport aux constituants polymères de la dispersion polymère aqueuse, d'un colloïde de protection cationique du groupe consistant en des homopolymères ou des copolymères d'un ou de plusieurs monomères cationiques du groupe consistant en le chlorure de diallyldiméthylammonium (DADMAC), le chlorure de diallyldiéthylammonium (DADEAC), le chlorure de (3-méthacryloxy)propyltriméthylammonium (MPTAC), le chlorure de (3-méthacryloxy)éthyltriméthylammonium (METAC), le chlorure de (3-méthacrylamido)propyltriméthylammonium (MAPTAC), le méthacrylate de 2-diméthylaminoéthyle ou le 3-diméthylaminopropylméthacrylamide (DMAEMA ou DMAPMA) comme adjuvant de séchage.

2. Procédé selon la revendication 1, **caractérisé en ce qu'**on utilise comme colloïdes de protection cationiques des polymères qui contiennent des unités monomères présentant des groupes d'ammonium quaternaire.

3. Procédé selon la revendication 1 à 2, **caractérisé en ce qu'**on utilise des colloïdes de protection cationiques présentant une valeur K (détermination en se référant à la norme DIN 53726, 1% en poids dans l'eau, 25°C, viscosimètre d'Ubbelohde) de 10 à 250.

4. Procédé selon la revendication 1 à 3, **caractérisé en ce qu'**on utilise des colloïdes de protection cationiques présentant une viscosité de Höppler de 1 à 50 mPa.s (détermination par le procédé selon Höppler à 20°C selon DIN 53015).

5. Procédé selon la revendication 1 à 4, **caractérisé en ce qu'**on polymérise comme monomères éthyléniquement insaturés un ou plusieurs du groupe comprenant les esters vinyliques d'acides alkylcarboxyliques non ramifiés ou ramifiés comprenant 1 à 15 atomes de carbone, les esters de l'acide méthacrylique et de l'acide acrylique d'alcools comprenant 1 à 15 atomes de carbone, les aromatiques de vinyle, les oléfines, les diènes et les halogénures de vinyle.

6. Utilisation des produits du procédé selon la revendication 1 à 5 dans des produits chimiques de construction, pour la production d'adhésifs de construction, de crépis, d'enduits, d'enduits de sol, de masses d'étalement, de pâtes de bouchage, de mortiers pour joints et de peintures.

7. Utilisation des produits du procédé selon la revendication 1 à 5 dans le domaine des adhésifs et des revêtements.
